# EUROPEAN PATENT APPLICATION

(11) **EP 2 565 834 A1**
(43) Date of publication of application: **06.03.2013**
(21) Application number: 12182459.3
(22) Date of filing: 30.08.2012
(51) Int. Cl.: G06Q 10/10

(54) **Schedule managing method and apparatus**

(30) Priority: 31.08.2011 KR 20110088000
(71) Applicant: Samsung Electronics Co., Ltd., Suwon-si, Gyeonggi-do, 443-742 (KR)
(72) Inventor: Park, Mijung, Gyeonggi-do 443-742 (KR); Ahn, Yumi, Gyeonggi-do 443-742 (KR); Kim, Taeyeon, Gyeonggi-do 443-742 (KR)
(74) Representative: Harrison Goddard Foote

(57) **Abstract**

A schedule managing method and apparatus in which the method preferably includes: displaying on a display a deadline setting icon for setting a deadline of at least one schedule; selecting the deadline setting icon; and setting the deadline of the schedule in response to the selection of the deadline setting icon. The schedule managing apparatus preferably includes: a display unit for displaying a deadline setting icon for setting a deadline of at least one schedule; a pointer for selecting the deadline setting icon displayed by the display unit; and a controller for setting the deadline of the schedule in response to the selection of the deadline setting icon.

## Description

### BACKGROUND OF THE INVENTION

### Field of the Invention

The present invention relates generally to a schedule managing method and apparatus. More particularly, although not exclusively, the present invention relates to a schedule managing method capable of setting a deadline of a schedule and an apparatus thereof.

### Description of the Related Art

Due to various new designs and applications stimulating consumer demand, a market for portable terminals has rapidly grown. In particular, unlike an existing portable phone using only given functions from the manufacturer, a smart phone has the capability to download and install various applications for taking a photograph or photographing a moving image, playback of audio and video, online games, watching broadcasting, social network service from an online market, etc., just to name a few examples of the possible applications (i.e. "apps" for relatively short applications).

More recently, manufactured portable terminals tend to include a touch screen and provide a method for managing a schedule of the user through the touch screen. However, in a conventional method for managing a schedule, it is difficult to edit a registered schedule.

In particular, in the conventional method for managing a schedule, for example, in order to change a deadline of a registered schedule, the user needs to move to a screen for editing a schedule (typically after first displaying the schedule) and then newly input a date on an editing screen after selecting an edit option subsequent to viewing the schedule. This procedure is very complicated, especially since the user may often manage various schedules and a deadline may frequently change.

### SUMMARY OF THE INVENTION

It is an aim of certain embodiments of the present invention to address, solve, mitigate or obviate, at least partly, at least one of the problems and/or disadvantages associated with the prior art. Certain embodiments aim to provide at least one of the advantages described below.

Certain aspects of the present invention aim to address at least the above-mentioned problems and/or disadvantages, and provide at least one of the advantages described below. Accordingly, certain embodiments of the present invention provide a schedule managing method for selecting a displayed deadline setting icon that allows the user to easily set a deadline of a schedule, and an apparatus thereof.

In accordance with an exemplary aspect of the present invention, a schedule managing method preferably includes: displaying a deadline setting icon for setting a deadline of at least one schedule; sensing by the display (or other input sensing unit, for example) the selection of the deadline setting icon; and setting the deadline of the schedule in response to the selection of the deadline setting icon.

In accordance with another exemplary aspect of the present invention, a schedule managing apparatus preferably includes: a display unit for displaying a deadline setting icon for setting a deadline of at least one schedule; a pointer (or input unit or input device, for example) for selecting the deadline setting icon displayed by the display unit; and a controller for setting the deadline of the schedule in response to the selection of the deadline setting icon.

Another aspect of the present invention provides a computer program comprising instructions arranged, when executed, to implement a method and/or apparatus in accordance with any one of the above-described aspects. A further aspect provides machine-readable storage storing such a program.

Other aspects, advantages, and salient features of the invention will become apparent to those skilled in the art from the following detailed description, which, taken in conjunction with the annexed drawings, disclose exemplary embodiments of the invention.

### BRIEF DESCRIPTION OF THE DRAWINGS

The above and other exemplary aspects, and features and advantages of certain exemplary embodiments of the present invention will become more apparent from the following detailed description in conjunction with the accompanying drawings, in which:
FIG. 1 is a block diagram illustrating a configuration of a schedule managing apparatus according to an exemplary embodiment of the present invention;
FIGS. 2 to 6 are non-limiting examples of views illustrating some of the many ways a user interface for setting a deadline according to the present invention may appear on a portable terminal;
FIG. 7 is a flowchart illustrating exemplary operation of a schedule managing method according to an exemplary embodiment of the present invention;
FIG. 8 is a flowchart illustrating exemplary operation of a schedule managing method according to another exemplary embodiment of the present invention; and
FIG. 9 is a flowchart illustrating exemplary operation of a schedule managing method according to a further exemplary embodiment of the present invention.

### DETAILED DESCRIPTION

A schedule managing method and apparatus according to exemplary embodiments of the present invention are described herein with reference to the accompanying drawings in detail.

The following description of exemplary embodiments of the present invention, with reference to the accompanying drawings, is provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the embodiments described herein can be made without departing from the scope of the invention.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

The same or similar reference numbers are used throughout the drawings to refer to the same or like parts. Detailed descriptions of well-known processes, functions, constructions and structures incorporated herein may be omitted for clarity and conciseness, and to avoid obscuring appreciation, by a person of ordinary skill in the art, of the subject matter of the present invention with a detailed description of such well-known processes, functions, constructions and structures.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, it is to be understood that the singular forms "a," "an," and "the" include plural referents unless the context clearly dictates otherwise, and where the indefinite article is used, the specification is to be understood as contemplating plurality as well as singularity, unless the context requires otherwise. Thus, for example, reference to "an object" includes reference to one or more of such objects.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

A schedule managing apparatus according to the present invention comprises a device including a pointer (or input unit or input device, for example), which is applicable to various information communication devices and multi-media devices such as portable phones, smart phones, tablet PCs, handheld PCs, Portable Multimedia Players (PMP), Personal Digital Assistants (PDA), music players (e.g., MP3 player), and portable game terminals, digital broadcasting players, and application devices thereof. The pointer (or input unit or input device) preferably includes a write pen, a mouse, a touch pad, a track ball, and a touch screen. Hereinafter, it is assumed that the schedule managing apparatus is a smart phone and the pointer is a touch screen, although the skilled person will appreciate that the present invention is not limited to these particular examples.

The schedule managing apparatus of the present invention preferably includes an application or a widget, or other software or firmware, which may manage a schedule of a user. A schedule may comprise, for example, a task, job, event or appointment, and the like, that a user wishes to keep track of, that is associated with one or more deadlines or time points. A deadline or time point may be defined by a date and/or time, and may be defined as an absolute time or a relative time. In the present application, the term "schedule" may be used, for example, to refer either to an individual item, or to a list or set of such items, as the context dictates.

In an exemplary embodiment, the widget comprises a mini application that allows a user to directly use contents or functions through an application. For example, there may be an application such as weather, calendar, calculator, and news as examples of a widget. Hereinafter, it is assumed that the application includes a widget, although the skilled person will appreciate that the present invention is not limited to this particular example. The schedule managing application may be downloaded from an on-line market. A schedule managing application provides a user interface function that allows a user to easily advance or extend a deadline set in a schedule, namely, a D-day. Further, the schedule managing application provides a re-alarm function of a schedule.

In other words, a schedule managing application of the present invention provides one or more functions that may alarm, or alert a user to, a deadline of a schedule (e.g. a deadline or time point associated with a schedule) at an alarm time set in the schedule, and re-alarm, or re-alert the user to, the deadline according to the request of the user at a later date and/or time, and/or change the deadline of the schedule to another date and/or time.

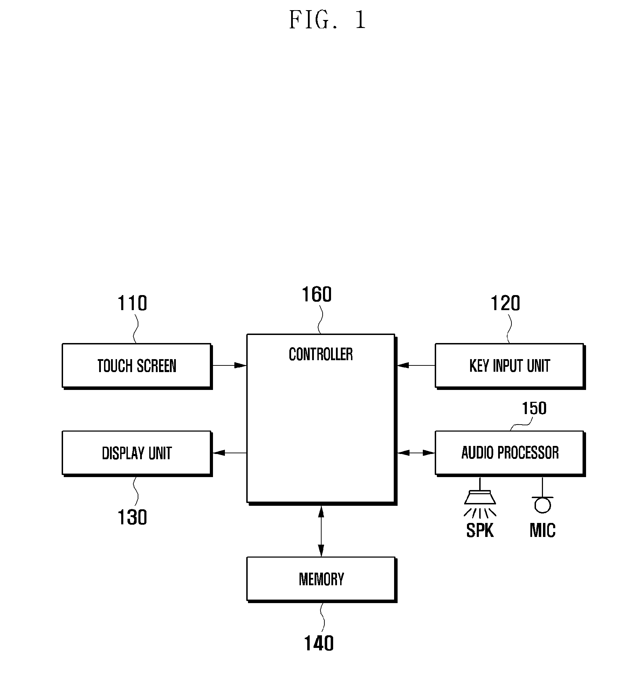

FIG. 1 is a block diagram illustrating a configuration of a schedule managing apparatus according to an exemplary embodiment of the present invention.

Referring now to FIG. 1, a schedule managing apparatus of the present invention may preferably include a touch screen 110, a key input unit 120, a display unit 130, a memory 140, an audio processor 150, a speaker SPK, a microphone MIC, and a controller 160.

The schedule managing apparatus having a construction as mentioned above displays a home screen including icons indicating various applications, respectively. If an icon of the schedule managing application is displayed on the home screen, the schedule managing apparatus performs a corresponding application to display the schedule list. Moreover, the schedule managing apparatus displays detailed information and deadline information with respect to respective schedules. Furthermore, the schedule managing apparatus displays a deadline setting icon with respect to the respective schedules. If the deadline setting icon is touched by the user (or selected by any type of pointer or other input unit or input device), the schedule managing apparatus advances or extends a deadline of a corresponding schedule by one day. For example, if the deadline of the schedule is set to today, the user may touch a deadline setting icon of the corresponding schedule to delay the deadline until tomorrow. Optionally, a confirmation prompt may be displayed, in case the user inadvertently touched the screen or touched the wrong icon. As another example, when the deadline of the schedule is tomorrow or some subsequent date, the user may touch a deadline setting icon of the corresponding schedule to extend or advance the deadline by one day or other set or predetermined period. In this case, the deadline setting icon contains an icon for advancing the deadline by one day (or other period) and an icon for extending the deadline by one day (or other period). When the deadline of the schedule is not set or lapses, the user may touch a deadline setting icon of the corresponding schedule to determine, or set, the deadline as today, or other time. Moreover, the schedule managing apparatus may alarm a deadline of the corresponding schedule at a designated alarm time and perform the schedule managing application to display detailed information of the corresponding schedule including the deadline information and the deadline setting icon. Hereinafter, respective constructions of the schedule managing apparatus in exemplary embodiments of the present invention will be described in detail.

The touch screen 110 senses the touch event and generates and transfers a signal corresponding to the particular type of touch event in response to a touch of the user with respect to a certain point of the screen to the controller 160. The controller typically includes a processor or microprocessor that is configured for operation. The touch event may be classified into, for example, touch, tap, double tap, press, drag, drag & drop, flick, and drag & flick according to its operation. In this case, the touch is an operation that a user pushes one point. The tap is an operation that the user separates, namely, drops a finger from a corresponding point without movement of the finger after touching one point. The double tap is an operation that continuously taps one point of the screen twice. The press is an operation that separates a finger from a corresponding point without movement of the finger after touching it longer than the tap. The drag is an operation that moves a finger in a predetermined direction in a state that the user touches one point. The drag & drop is an operation that separates a finger after dragging the finger. The flick is an operation that separates a finger after moving the finger at rapid speed like flipping. Here, the drag is referred to as 'scroll'. The drag & flick is an operation that drags a finger and flicks the finger at a predetermined time point, that is, an operation continuously performing the drag and the flick in a state that the finger contacts with the touch screen 110. The controller 160 may distinguish the flick from the drag based on moving speed. The controller 160 controls the display unit 130 in response to the touch event. All of these operations are used in touch screens for current smart phone technology. A person of ordinary skill in the art understands and appreciates that additional touch/gesture functionality not disclosed herein above could also be used in conjunction with the presently claimed invention. For definitive purposes, the term "contacts" is to be interpreted in the appended claims that all of the above described ways of touch, tap, press, flick, drag with a finger, stylus or other types of pointing devices should be included in such a definition.

With continued reference to FIG. 1, the key input unit 120 is configured by a plurality of keys for operating the schedule managing apparatus, and transfers a key signal to the controller 160. The controller 160 controls the display unit 130 in response to the key signal. The key signal may be divided into, for example, a power on/off signal, a volume control signal, and a screen on/off signal.

The display unit 130 converts image data received from the controller 160 into an analog signal, and displays the analog signal. Stated another way, the display unit 130 displays various screens such as a lock screen, a home screen, and an application execution screen according to the use of the schedule managing apparatus. In this particular exemplary case, the lock screen is an image displayed when a power on signal for the display unit 130 is generated. For example, if a trace of the drag is identical with a preset trace, the controller 160 changes an image displayed on the screen from a lock screen to a home screen or an application execution screen. The home screen is an image including a plurality of icons for executing an application. If the user touches an icon, the controller 160 may execute a corresponding application and change a displayed image from the home screen to the application execution screen.

Further, the display unit 130 may be configured by a flat panel display such as, for example, a Liquid Crystal Display (LCD) or an Organic Light Emitted Diode (OLED). Any other type of thin-film technology display, or any other type of suitable display, may also be used. The display unit 130 may include a 3D implementing unit for displaying a left image and a right image, and allowing a user to feel depths of the left and right images. As known to those skilled in the art, 3D implementing schemes are typically divided or classified into spectacle schemes and non-spectacle schemes. The spectacle schemes preferably include a color filter scheme, a polarizing filter scheme, and a shutter glass scheme. The non-spectacle schemes preferably include a lenticular lens scheme and a parallax barrier scheme.

The memory 140 stores a screen to be outputted on the display unit 130, in particular, an execution screen of a schedule managing application as well as an application necessary for a function operation according to an exemplary embodiment of the present invention. Further, the memory 140 may store a key map or a menu map for an operation of the touch screen 110. In this case, the key map and the menu map may comprise various forms. In other words, the key map may become a keyboard map, a 3*4 key map, a Qwerty key map, a Dvorak key map, or a control key map, etc., for controlling a currently executed application. Further, the menu map may become a menu map for controlling a currently executed application.

The memory 140, which may comprise a machine readable non-transitory medium, may chiefly include a program area and a data area. The program area may store machine executable code such as an operating system (OS) for booting the schedule managing apparatus and operating the foregoing constructions, and an application program for supporting various user functions, for example, a user function for supporting a call function, a web browser for accessing an Internet server, an MP3 user function for playing other sound sources, an image output function for playing photographs, and a moving image playback function, etc. In particular, the program area of the present invention can store the foregoing schedule managing application. The data area comprises an area for storing data created by the controller 160, in particular, a schedule according to the use of the schedule managing apparatus, and may store an image (e.g., map) associated with the schedule, deadline information, alarm time, a preset value indicating the presence of the use of a re-alarm, and the number of alarms of a schedule to which re-alarm is previously set, and detailed information thereof.

The audio processor 150 performs a function that includes transmitting an audio signal, in particular, an alarm signal input from the controller 160 to the speaker SPK, and transmits an audio signal such as a voice input from the microphone MIC to the controller 160. Put another way, the audio processor 150 converts voice/sound data into an audible sound through a speaker SPK under the control of the controller 160. The audio processor 150 typically converts an audio signal such as a voice received from the microphone MIC into a digital signal, and transfers the digital signal to the controller 160.

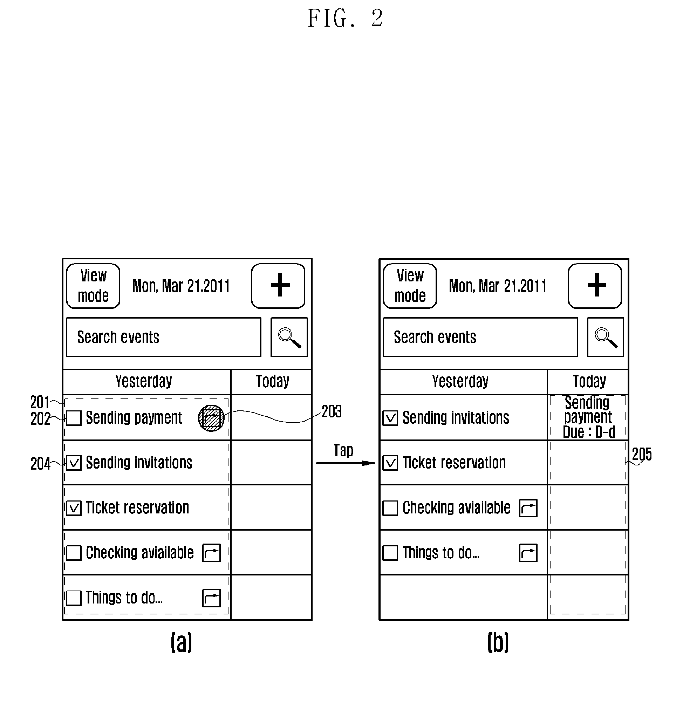

The controller 160 preferably controls an overall operation and signal flow between internal blocks of the schedule managing apparatus. In particular, the controller 160 performs a number of functions including a function for displaying a schedule, a deadline, and a deadline setting icon; a function for setting a deadline of a schedule in response to selection of a deadline setting icon; a function for alarming a deadline of a corresponding schedule at an alarm time; and a function for again alarming the deadline after a set or predetermined time in response to a request of the user while alarming the deadline. The functions of the controller 160 will now be described with reference to FIGS. 2 to 6 in detail.

FIGS. 2 to 6 are views illustrating a user interface for setting a deadline according to the present invention. First, a controller 160 performs a function for easily changing a due date from yesterday to today (as shown, but in other exemplary embodiments could be or some other day). In detail, referring to FIG. 2(a), if an icon displaying a schedule the deadline of which lapses by one day is touched from icons displayed on a home screen, the controller 160 controls the display unit 130 to display a schedule list 201 the deadline of which has lapsed by one day. In this case, the displayed schedule list 201 includes a check box 202 corresponding to each schedule and an icon 203 for changing a deadline to today. If the user taps the check box 202, the touch screen 110 transfers a touch event associated therewith to the controller 160. Accordingly, the controller 160 controls the display unit 130 to eliminate a corresponding deadline setting icon 203 disappear.

Conversely, if the user taps a checked check box 204, the controller 160 releases the check and controls the display unit 130 to display a deadline setting icon. In other words, the user may change a deadline of a non-checked schedule. From a position of the user, the checked schedule is a schedule that has been previously performed or is unnecessary to be checked longer. In the meantime, if the user taps the deadline setting icon 203, the controller 160 controls the display unit 130 to eliminate a corresponding schedule from the schedule list. As shown in FIG. 2(b), the controller 160 controls the display unit 130 to display a schedule list 205 the deadline of which is today including a corresponding schedule. If a drag occurs on a region on which a schedule list 201 the deadline of which lapses by one day is displayed, the touch screen 110 transfers a touch event associated therewith to the controller 160. Accordingly, the controller 160 controls the display unit 130 to eliminate an existing displayed schedule. Further, the display unit 130 displays a new schedule. For example, if the user drags to an upper side, the schedules disappear from the upper-most schedule and a new schedule is displayed at the lower most part. Further, if the user drags from a right side to a left side, all existing displayed schedules disappear and a new schedule is displayed.

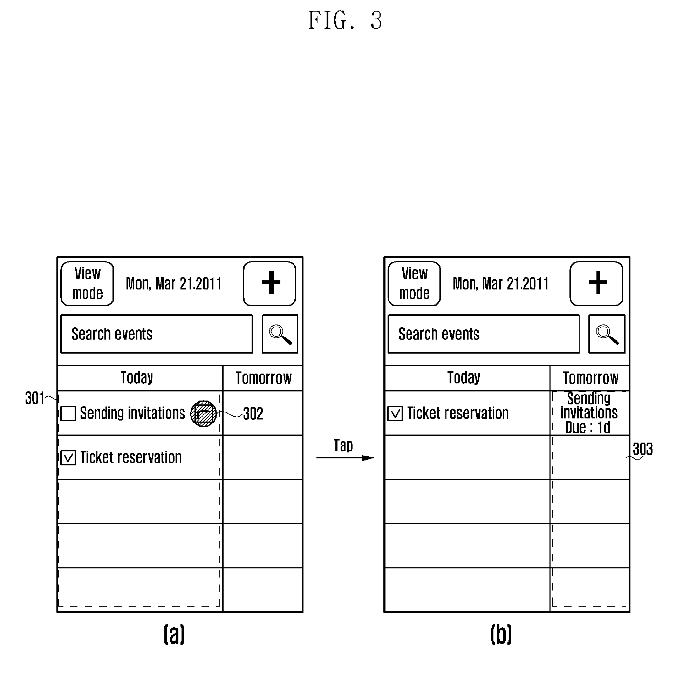

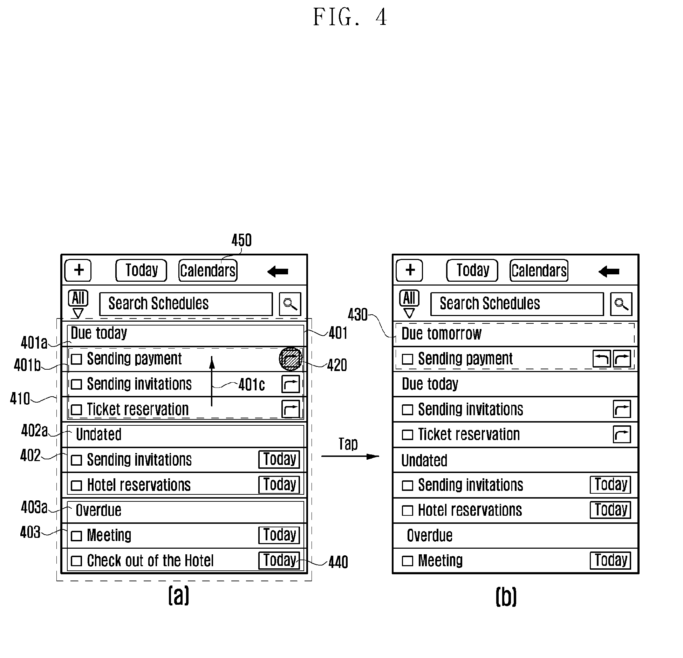

With reference to FIG. 3(a), the controller 160 performs a function capable of easily changing the deadline from today to tomorrow. In more detail, FIG. 3(a) shows the controller 160 of FIG. 1 controls the display unit 130 to display a schedule list 301, the deadline of which is today. If the user taps a deadline setting icon 302, the touch screen 110 transfers a touch event associated therewith to the controller 160. Accordingly, the controller 160 controls the display unit 130 to eliminate a corresponding schedule from the schedule list 301. As shown in FIG. 3(b), the controller 160 controls the display unit 130 to display the schedule list 303, the deadline of which is tomorrow, including the corresponding schedule of today (e.g. ticket reservation). In the meantime, now referring to FIG. 4(a), if the schedule managing application of the present invention is executed, the controller 160 controls the display unit 130 to display an execution screen including the schedule list 410. In this case, the schedule list 410 may preferentially include a schedule list a deadline 401a which is today.

Further, if sufficient display space is allowed or available, a schedule list 402, the deadline (402a) of which is not set, and a schedule list 403, the deadline 403(a) of which has lapsed, may be displayed. Moreover, if further display space is allowed or available, a schedule list, the deadline of which is after tomorrow, may also be displayed. Further, schedule lists classified by deadlines may include an indicator that allows a user to recognize when the deadline is. In other words, reference numeral 401a represents an indicator, the deadline of which is due today, reference numeral 403a represents an indicator, the deadline of which has lapsed, and reference numeral 402a represents an indicator, the deadline of which is not set (i.e. undated). Meanwhile, if the user taps an icon 420 for changing a deadline to due tomorrow, the controller 160 controls the display unit 130 to eliminate a corresponding schedule from a schedule list 401 the deadline of which is due today. As shown in FIG. 4(b), the controller 103 controls the display unit 130 to display the schedule list 430, a deadline of which is due tomorrow, including a corresponding schedule.

The controller 160 performs a function that may set a deadline of a schedule, the deadline of which is not set or has lapsed, to today. Referring back to FIG. 4(a), a controller 160 may control the display unit 130 to display an icon 440 for determining a deadline of a schedule, the deadline of which is not set or has lapsed, to today. If the icon 440 is tapped, the controller 160 controls the display unit 130 to eliminate a corresponding schedule from a corresponding schedule list. The controller 160 controls the display unit 130 to display a schedule list 401, the deadline of which is due today, including the corresponding schedule.

The controller 160 may change a schedule list to be displayed on a screen in many other ways than shown. For example, referring to FIG. 4(a), if a downward drag starting from a region on which an indicator 401a occurs, the controller 160 controls the display unit 140 to display a schedule list, the deadline of which is after tomorrow, at an upper most part. The controller 160 controls a display unit 130 to eliminate the schedule list 403, the deadline of which has lapsed and is overdue. As shown in FIG. 4(a), if a drag occurs to an upper side 401 c in a region 401b on which a schedule, a deadline of which is due today, is displayed, a touch screen 110 transfers a touch event associated therewith to the controller 160. Accordingly, the controller 160 eliminates a schedule at an upper most part in a region 401b and instead displays a new schedule at a lower most part.

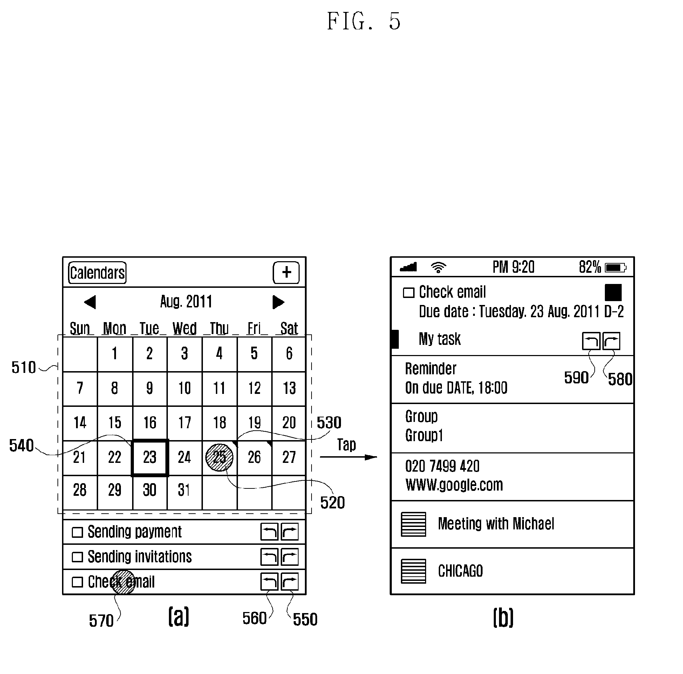

In another exemplary embodiment, referring to FIG. 5(a), a display unit 130 displays a current month. For example, if an indicator 450 of FIG. 4(a) for displaying a calendar is tapped, the touch screen 110 transfers a touch event associated therewith to the controller 160. Accordingly, the controller 160 controls the display unit 130 to display the calendar 510. The controller 160 displays an indicator 530 that allows a user to recognize the presence of a schedule at a date having a schedule of displayed dates. If the date having the schedule is tapped, the controller 160 controls the display unit 130 to display schedules of a corresponding date under the calendar 510. Meanwhile, reference numeral 540 is an indicator indicating today.

Subsequently, the controller 160 performs a function that can easily advance or extend the deadline by one day or more. In detail, referring back to FIG. 5(a), if, for example, an icon 550 for extending a deadline by one day or an icon 560 for advancing the deadline by one day is tapped, the controller 160 controls the display unit 130 to eliminate a corresponding schedule. Further, the controller 160 changes a deadline of a schedule to a corresponding date. Further, if a title of a schedule is tapped (570 of FIG. 5(a)), as shown in FIG. 5(b), the controller 160 controls a display unit 130 to display detailed information of a corresponding schedule. Referring now back to FIG. 5(b), if an icon for extending the deadline or an icon 590 for advancing the deadline is tapped, the controller 160 changes the deadline of the schedule to a corresponding date according to the number of taps.

When the deadline is extended by greater than a predetermined set (preset) amount, or is extended more that a preset number of times, in certain embodiments, the controller 160 may then perform a function for guiding the user in extending the deadline. In detail, referring to FIG. 5(b), if, for example, the user taps a deadline extending icon 580 by greater than the preset number of times, the controller 160 may control the display unit 130 to overlap a pop-up on a detailed information screen. In this case, the pop-up comprises a screen informing, or guiding, the user that the deadline is extended by greater than the predetermined amount, or is extended more than the preset number of times.

The preset number or preset amount comprises a value that the user can control. In other words, the controller 160 provides an option that allows the user to control the number of times, or the amount, designated as a default to the user.

The controller 160 may display the pop-up and controls the speaker SPK to output a guide sound. When the deadline is extended greater than the preset number of times, or by more than the preset amount, the controller 160 may control the display unit 130 to distinguish a corresponding schedule from another schedule and to display the corresponding schedule. For example, it is assumed that the pop-up includes contents indicating that "a deadline is extended by three days. Do you want to extend the deadline" and a "Yes/No" button. If the user taps a "Yes" button, the controller 160 controls the display unit 130 to eliminate the pop-up. Furthermore, the controller 160 may control the display unit 130 to display a title of a corresponding schedule, the deadline of which has been extended longer than a set value, distinguished from that of another schedule, for example by displaying it to have a bolder font, or to have a different color.

When the deadline is also shortened greater than the preset number of times, or by more than the preset amount, in certain embodiments, the controller 160 may perform a function for guiding the user in shortening the deadline. For example, the controller 160 may control the display unit to display a title of a schedule shortened greater than the preset number of times, or by more than the preset amount, distinguished from another schedule. Thus, the controller is configured to extend or shorten a deadline when the schedule is extended or shortened by the display sensing a number of touches or taps of the display screen that are greater (larger in quantity) than a preset number of times the touches or taps are configured in the controller as being sensed for selection of the deadline setting icon.

Moreover, the controller 160 may perform a function of limiting the extending and shortening of the deadline. In detail, referring to FIG. 5(b), if the user taps a deadline extending icon 580 greater than a preset number of times, the controller 160 may eliminate the deadline extending icon 580, to prevent the user from extending the deadline further. The same technique may be applied to prevent the user from shortening the deadline by more than a certain amount.

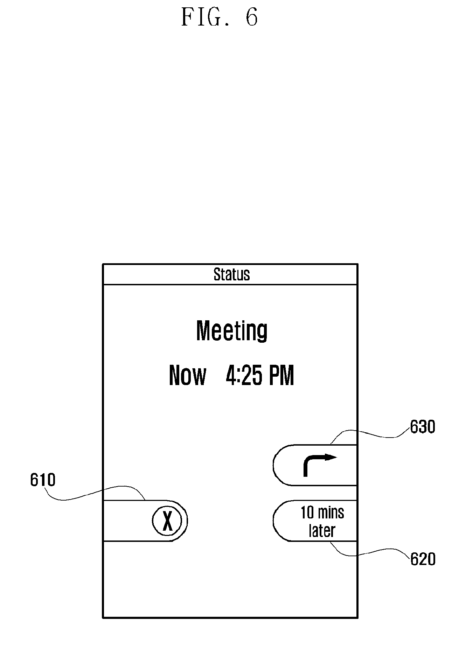

Next, the controller 160 performs a function for alarming a deadline of a schedule and a function for re-alarming the deadline of the schedule. In detail, referring to FIG. 6, if an alarm time of the schedule comes (e.g. if the current time is equal to the alarm time), the controller 160 controls the display unit 130 to display an alarm screen of a corresponding schedule. As shown in FIG. 6, the alarm screen preferably includes an icon 610 for terminating an alarm, an icon 620 for re-alarming after a set time, for example, 10 minutes, and an icon 630 for extending a deadline of a corresponding schedule, for example by one day. If a re-alarm icon 620 is tapped or dragged from the alarm screen, the controller 160 re-alarms after a preset time. Further, the controller 160 performs a function extending a deadline of a corresponding schedule while alarming (i.e. setting an alarm for) the schedule. Referring back to FIG. 6, if an icon for extending the deadline by one day is tapped, the controller 160 changes the deadline of a schedule to a corresponding date that is one day later than a current date.

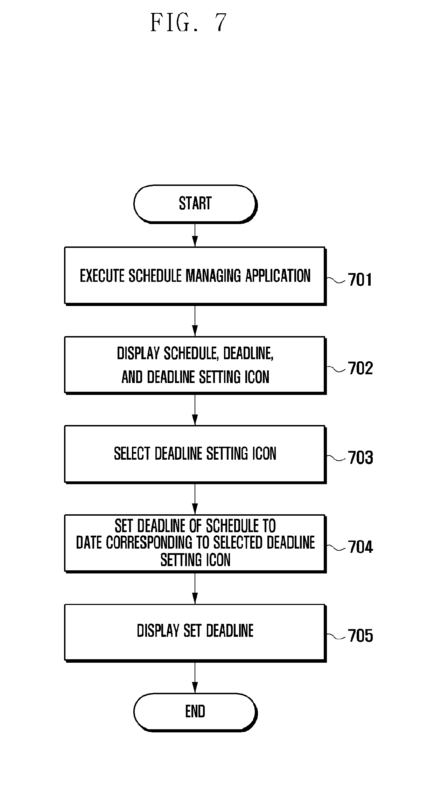

FIG. 7 is a flowchart illustrating exemplary operation of a schedule managing method according to an exemplary embodiment of the present invention. Referring now to FIG. 7, at (701) if an icon for executing a schedule managing application of icons displayed on a home screen is touched by a user, a controller 160 executes a corresponding application. Next, at (702) the controller 160 controls a display unit 130 to display an application execution screen including a schedule, a deadline, and a deadline setting icon. In this case, the application execution screen may become an execution screen as shown in FIGS. 2 to 5. The deadline setting icon includes an icon for determining a deadline as today when a deadline of a corresponding schedule is not set or lapses. Further, the deadline setting icon preferably includes an icon for changing a deadline of a corresponding schedule to tomorrow when the deadline of a corresponding schedule is today. Moreover, the deadline setting icon preferably includes an icon for advancing a deadline of a corresponding schedule and an icon for extending a deadline of a corresponding schedule when the deadline of a corresponding schedule is after tomorrow.

If a displayed deadline setting icon is selected by a user, at (703) the touch screen 110 transfers a touch event associated therewith to the controller 160. Accordingly, at (704) the controller 160 detects the selection of the deadline setting icon, sets a deadline of a schedule to a date corresponding to a selected deadline setting icon, and stores the set deadline information in a memory 140. At (705) the controller 160 may control the display unit 310 to display the set deadline.

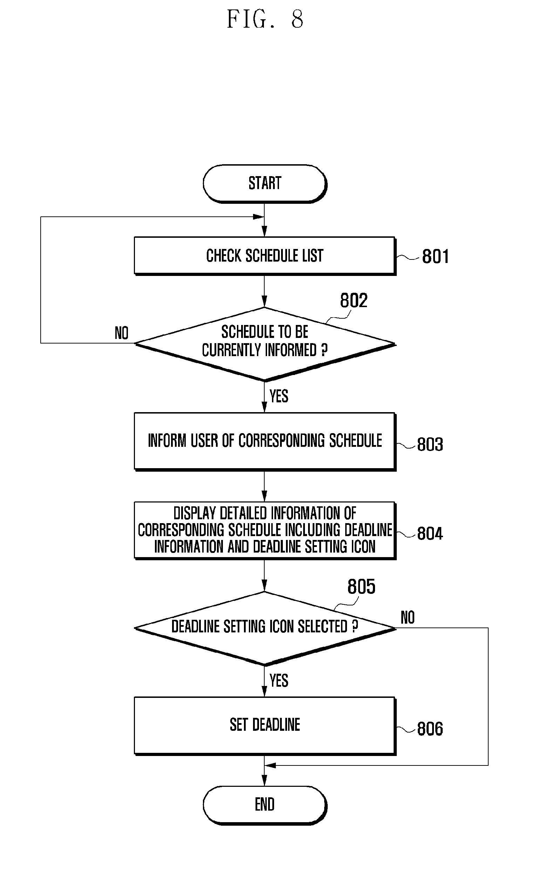

FIG. 8 is a flowchart illustrating exemplary operation of a schedule managing method according to another exemplary embodiment of the present invention. Referring now to FIG. 8, at (801) a controller 160 checks a stored schedule list. At (802) when there is a schedule in a schedule list that a user should be currently informed of, then at (803) the controller 160 informs the user of a corresponding schedule through a speaker "SPK".

With continued reference to FIG. 8, at (804) the controller 160 controls the display unit 130 to display a corresponding schedule. For example, as shown in FIG. 5(b), the controller 160 may control the display unit 130 to display detailed information of a corresponding schedule including deadline information and a deadline setting icon. As shown in FIG. 6, the controller 160 may display an alarm screen including a title, an alarm time, and a deadline setting icon of a schedule. When at (805) the deadline setting icon is selected, the touch screen 110 transfers a corresponding touch event to the controller 160. Accordingly, at (806) the controller 160 changes a deadline of a corresponding schedule to another date and stores the changed deadline information in a memory 140.

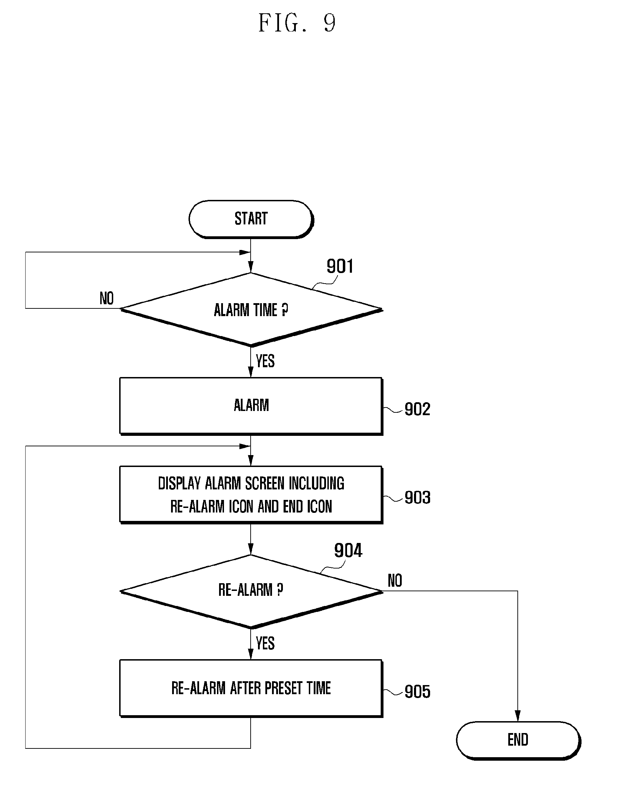

FIG. 9 is a flowchart illustrating exemplary operation of a schedule managing method according to a further exemplary embodiment of the present invention.

Referring now to FIG. 9, at (901) a controller 160 determines whether a current time is an alarm time. In other words, the controller 160 determines whether there is a schedule that a user should be currently informed of. If at (901) the controller 16 determines that the current time is the alarm time, then at (902) controller 160 controls a speaker SPK to sound an alarm. As shown in FIG. 6 and (903) in FIG. 9, the controller 160 controls the display unit 130 to display an alarm screen including a re-alarm icon 620 and an end icon 610. When the user taps the re-alarm icon 620 as a response to an alarm, then at (904) the touch screen 110 transfers a corresponding touch event to the controller 160. Accordingly, at (905) the controller 160 controls the speaker SPK to pause the alarm. Further, the controller 160 controls the display unit 130 to eliminate an alarm screen. Further, after a preset time has elapsed, at (905) the controller 160 controls the speaker SPK to re-alarm and returns to step (903). Conversely, if the user taps an end icon 610 as a response to the alarm at (904), the touch screen 110 transfers a touch event associated therewith to the controller 160. Accordingly, the controller 160 terminates the alarm and controls the display unit 130 to eliminate an alarm screen. The number of times an alarm in the schedule is given or repeated may be previously set. In this schedule, the controller 160 counts the number of times an alarm in the schedule is given or repeated. If the counted number of times an alarm in the schedule is given or repeated becomes a preset value, the controller 160 automatically terminates the alarm. Such a set value may be controlled by the user. Re-alarm of the schedule may be previously set. In a case of the schedule, if the user does not respond to the alarm for a predetermined time, the controller 160 controls the speaker SPK to pause the alarm. The controller 160 controls the display unit 130 to eliminate an alarm screen. If a preset time lapses, the controller may control the speaker SPK to sound a re-alarm.

A schedule managing method and an apparatus thereof according to the present invention provides an icon capable of setting a deadline together with deadline information when displaying a schedule such that the user may easily set a deadline of a schedule.

The above-described methods according to the present invention can be implemented in the form of hardware, firmware or software, or any combination of hardware, firmware and software.

Any such software, for example in the form of computer code, may be stored in the form of volatile or non-volatile storage such as, for example, a storage device like a ROM, whether erasable or rewritable or not, or in the form of memory such as, for example, RAM, memory chips, device or integrated circuits, or on an optically or magnetically readable recording medium such as, for example, a CD (including CD ROM, CD-R and CD-RW), DVD (including DVD ROM, DVD-R and DVD-RW), a RAM, magnetic tape, magnetic disk (including a floppy disk and a hard disk), or a magneto-optical disk, or the like.

Any such software or computer code may be downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA.

As would be understood in the art, the computer, the processor, microprocessor controller or the programmable hardware include memory components, e.g., RAM, ROM, Flash, thumbnail, etc. that may store or receive software or computer code that when accessed and executed by the computer, processor or hardware, implement the processing methods described herein. In addition, it would be recognized that when a general purpose computer accesses code for implementing the processing shown herein, the execution of the code transforms the general purpose computer into a special purpose computer for executing the processing shown herein.

It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Although a schedule managing method and an apparatus thereof according to exemplary embodiments of the present invention have been described in detail hereinabove, it should be clearly understood that many variations and modifications of the basic inventive concepts taught herein which may appear to those skilled in the present art will still fall within the scope of the present invention, as defined in the appended claims.

## Claims

1. A schedule managing method comprising:
displaying by a display a deadline setting icon for setting a deadline of at least one schedule;
detecting by a controller a selection of the deadline setting icon; and
setting by the controller the deadline of the at least one schedule to a time corresponding to the deadline setting icon in response to detecting the selection of the deadline setting icon.

2. The method of claim 1, wherein displaying a deadline setting icon comprises at least one of:
displaying an icon that when selected signals the controller to change the deadline of the schedule when the deadline of the schedule was previously set; and
displaying an icon that when selected signals the controller to determine the deadline of the schedule when the deadline of the schedule has not been set.

3. The method of claim 2, wherein displaying an icon for changing the deadline of the schedule comprises:
displaying an icon that when selected signals the controller to extend the deadline of the schedule when the deadline of the schedule is identical with a current time point; and
displaying an icon that when selected signals the controller to delay or advance the deadline of the schedule when the deadline of the schedule differs from the current time point.

4. The method of claim 1, 2 or 3, further comprising guiding by the controller an extended or shortened deadline when the deadline of the schedule is extended or shortened by the display sensing a number of contacts of the display screen being greater than a preset number of times configured for sensing when selection of the deadline setting icon has occurred.

5. The method of any preceding claim, wherein sensing selection of the deadline setting icon comprises sensing selection of the deadline setting icon in response to a touch event associated with the deadline setting icon input from a touch screen.

6. The method of any preceding claim, wherein setting the deadline of the schedule by the controller comprises at least one of:
changing the deadline of the schedule when the deadline of the schedule is set; and
determining the deadline of the schedule as a current time point when the deadline of the schedule is not set.

7. The method of any preceding claim, wherein setting the deadline of the schedule by the controller comprises extending or advancing the deadline of the schedule by the number of taps input from a touch screen.

8. The method of any preceding claim, wherein displaying a deadline setting icon comprises:
checking whether there is a schedule to be alarmed at least with respect to a certain time, day or date in the schedule list; and
displaying by the display the schedule to be alarmed, a deadline of the schedule to be alarmed, and an icon for setting the deadline of the schedule to be alarmed when there is the schedule to be alarmed in the schedule list as the checked result.

9. The method of any preceding claim, wherein displaying a deadline setting icon comprises:
displaying a first schedule list of scheduled items and a second schedule list of scheduled items each having respectively different deadlines from each other;
moving a scheduled item corresponding to a deadline setting icon included in the first schedule list to the second schedule list and displaying the moved scheduled item when the deadline setting icon included in the first schedule list is selected by a user.

10. The method of any preceding claim, further comprising the controller alarming a schedule to actuate a speaker when the schedule is included in a schedule list; and
displaying an alarm screen including a first icon for terminating the alarm, and a second icon for re-alarming the schedule after a preset time.

11. The method of claim 10, wherein the alarm screen comprises a third icon for setting a deadline of the alarmed schedule.

12. A schedule managing apparatus comprising:
a display unit that displays a deadline setting icon for setting a deadline of at least one schedule;
a touch screen that generates a touch event related to a selection of the deadline setting icon displayed by the display unit; and
a controller that sets the deadline of the schedule to a time corresponding to the deadline setting icon in response to generating the touch event.

13. The apparatus of claim 12, wherein the controller changes the deadline of the schedule when the deadline of the schedule has been previously set; and the controller determines the deadline of the schedule as a current time point when the deadline of the schedule is not set.

14. The apparatus of claim 13, wherein the controller:
extends the deadline of the schedule when the set deadline of the schedule is identical to the current time point; and
delays or advances the deadline of the schedule when the deadline of the schedule differs from the current time point.

15. The apparatus of claim 12, 13 or 14, wherein the controller delays or advances the deadline of the schedule by the number of the contact selections of the deadline setting icon input from the touch screen.
